# EUROPEAN PATENT SPECIFICATION

(11) **EP 4 412 444 B1**
(45) Date of publication and mention of the grant of the patent: **04.11.2026**
(21) Application number: 22879100.0
(22) Date of filing: 26.09.2022
(51) Int. Cl.: A01G 25/02, A01G 25/16, A01C 23/04, A01C 23/02, A01G 25/09, B01D 29/60, B01D 35/02, B01D 35/143, B01D 35/16, B01D 37/04

(54) **SYSTEM, METHOD AND APPARATUS FOR FILTER AND OVERHANG PLUGGING DETECTION**
SYSTEM, VERFAHREN UND VORRICHTUNG ZUR FILTER- UND ÜBERHANGVERSTOPFUNGSDETEKTION
SYSTÈME, PROCÉDÉ ET APPAREIL DE DÉTECTION DE COLMATAGE DE FILTRE ET D'OBSTRUCTION EN SURPLOMB

(30) Priority: 06.10.2021 US 202163252703 P
(43) Date of publication of application: 14.08.2024
(73) Proprietor: Valmont Industries, Inc., Omaha, NE 68154 (US)
(72) Inventor: DIXON, Joshua M., Elkhorn, Nebraska 68022 (US); KASTL, John, Wahoo, Nebraska 68066 (US)
(74) Representative: Zacco Sweden AB
(86) International application number: PCT/US2022/044664
(87) International publication number: WO 2023/059461

(56) References cited:
- CN-U- 207 201 612
- US-A- 4 207 181
- US-A1- 2002 144 952
- US-A1- 2005 279 856
- US-A1- 2008 230 131
- US-A1- 2012 053 776
- US-A1- 2018 329 442
- US-B2- 7 280 892

## Description

### BACKGROUND AND FIELD OF THE PRESENT INVENTION:

### Field of the Present invention

The present invention relates generally to irrigation machines and, more particularly, to a system, method and apparatus for filter and overhang plugging detection.

### Background of the Invention

Modern field irrigation machines are combinations of drive systems and sprinkler systems. Common irrigation machines most often include an overhead sprinkler irrigation system consisting of several segments of pipe (usually galvanized steel or aluminum) joined together and supported by trusses, mounted on wheeled towers with sprinklers positioned along its length. These machines move in a circular pattern (if center pivot) or linear and are fed with water from an outside source (i.e., a well or water line). The essential function of an irrigation machine is to transport water (and other applicants) from a water source to a given location.

A critical issue with irrigation machines is the need to filter out sand, debris (wood, dirt, fish, etc.) and oxidized organics found in some water supplies. To address this issue, filters are often incorporated at various points in the irrigation system. Commonly, large, in-line pressure filters are attached between the water supply and the main irrigation riser of a given irrigation machine. These pressure filters are commonly fitted with internal screen brush systems which act to physically separate sand and other sediment from the water before it enters the main irrigation spans. Additionally, sand traps are commonly located along the main irrigation spans to further separate and trap sediment as it settles within the spans.

Because of the large volumes of water processed by the irrigation machine, each of the filters within the system require regular flushing. The amount of flushing required generally depends on the sediment load of the irrigation water, the flow rate of the machine and the hours of use. If the filters are not regularly flushed, the restriction of flow to the pivot will result in increased pumping costs and/or decreased uniformity of application.

Most commonly, growers have relied on expensive flowmeters to ensure the proper flow rate through the irrigation system. In addition to being expensive, flowmeters are often prone to clogging and failure when used with water having high levels of sediment. Because of this, growers have generally resorted to cleaning out filters according to a fixed schedule. This type of scheduling is imprecise and results in both under-maintenance and over-maintenance of the filter systems.

CN 207 201 612 U discloses an irrigation and water conservancy water-saving irrigation system with real-time supervision function for irrigation of farmland.

In order to overcome the limitations of the prior art, a system is needed which is able to reliably provide growers with filter status information in a timely manner.

### SUMMARY OF THE DISCLOSURE

To minimize the limitations found in the prior art, and to minimize other limitations that will be apparent upon the reading of the specifications, the present invention provides a system, method and apparatus for monitoring and providing maintenance updates for irrigation filters.

According to a first preferred embodiment, the present invention may preferably include one or more load cells at one or more of the mounting feet of an in-line filter to actively measure the increased weight of the filter during irrigation operations. The weight sensor preferably sends its data to a processing unit (e.g., a controller within a pivot control panel) where the weight is compared to one or more stored weight values. Preferably, when the detected weight exceeds a threshold level, the system may trigger notices and/or remedial actions as discussed further herein.

According to a second preferred embodiment, the present invention may preferably include a differential pressure transducer that measures the pressure differential across a given filter screen. Preferably, the detected levels of pressure differentials are compared to stored threshold levels indicating a filter maintenance issue requiring remedial action.

According to a third preferred embodiment, the present invention may further include a load cell mounted in one or more of the overhang cables. Preferably, when the detected weight exceeds a threshold level, the system may trigger notices and/or remedial actions as discussed further herein.

### Brief Description of the Drawings

FIG. 1 illustrates an exemplary self-propelled irrigation system 100 which may be used with example implementations of the present invention.
FIG. 2 shows an illustration of an exemplary irrigation system in accordance with a first preferred embodiment of the present invention.
FIG. 3 is a further detailed view of the exemplary irrigation system shown in FIG. 2.
FIG. 4 is a flow chart illustrating a first set of method steps in accordance with an exemplary embodiment of the present invention.
FIG. 5 is a flow chart illustrating a second set of method steps in accordance with an exemplary embodiment of the present invention.
FIG. 6 is a flow chart illustrating a third set of method steps in accordance with an exemplary embodiment of the present invention.

### Description of the Preferred Embodiments

For the purposes of promoting an understanding of the principles of the present invention, reference will now be made to the embodiments illustrated in the drawings and specific language will be used to describe the same. It will nevertheless be understood that no limitation of the scope of the present invention is hereby intended and such alterations and further modifications in the illustrated devices are contemplated as would normally occur to one skilled in the art. The descriptions, embodiments and figures used are not to be taken as limiting the scope of the claims.

Where the specification describes advantages of an embodiment or limitations of other prior art, the applicant does not intend to disclaim or disavow any potential embodiments covered by the appended claims unless the applicant specifically states that it is "hereby disclaiming or disavowing" potential claim scope. Moreover, the terms "embodiments of the invention", "embodiments" or "invention" do not require that all embodiments of the invention include the discussed feature, advantage or mode of operation, nor that it does not incorporate aspects of the prior art which are sub-optimal or disadvantageous.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments. Additionally, any examples or illustrations given herein are not to be regarded in any way as restrictions on, limits to, or express definitions of, any term or terms with which they are utilized. Instead, these examples or illustrations are to be regarded as illustrative only.

As used herein, the singular forms "a", "an" and "the" are intended to include the plural forms as well, unless the context clearly indicates otherwise. Additionally, the word "may" is used in a permissive sense (i.e., meaning "having the potential to'), rather than the mandatory sense (i.e., meaning "must"). Further, it should also be understood that throughout this disclosure, unless logically required to be otherwise, where a process or method is shown or described, the steps of the method may be performed in any order (i.e., repetitively, iteratively, or simultaneously) and selected steps may be omitted. It will be further understood that the terms "comprises," "comprising," "includes" and/or "including", when used herein, specify the presence of stated features, integers, steps, operations, elements, and/or components, but do not preclude the presence or addition of one or more other features, integers, steps, operations, elements, components, and/or groups thereof.

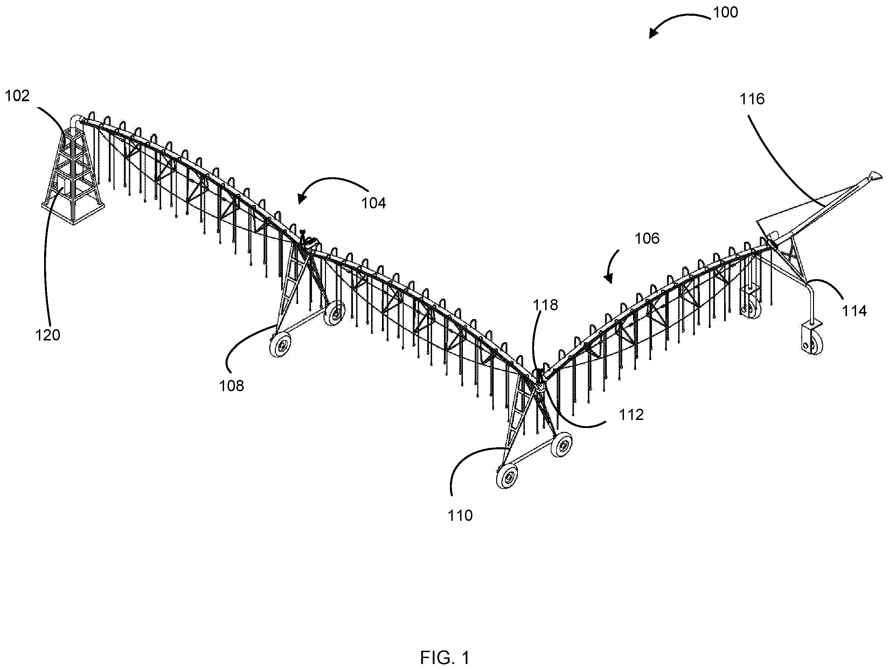

FIG. 1 illustrates an exemplary self-propelled irrigation system 100 which may be used with example implementations of the present invention. As should be understood, the irrigation system 100 disclosed in FIG. 1 is an exemplary irrigation system onto which the features of the present invention may be integrated. Accordingly, FIG. 1 is intended to be illustrative and any of a variety of systems (i.e., fixed systems as well as linear, center pivot and corner systems) may be used with the present invention without limitation.

With reference now to FIG. 1, an exemplary irrigation machine 100 of the present invention preferably may include a center pivot structure 102, a main span 104, and supporting drive towers 108, 110. The exemplary irrigation machine 100 may also include a corner span 106 attached at a connection point 112. The corner span 106 may be supported and moved by a steerable drive unit 114. The corner span 106 may include a boom 116 and an end gun (not shown) and/or other sprayers. Additionally, a position sensor 118 may provide positional and angular orientation data for the system. A central control panel 120 may also be provided and may enclose on-board computer systems for monitoring and controlling the operations of the irrigation machine. The control panel 120 may also be linked to a transceiver for transmitting and receiving data between system elements, device/internet clouds, remote servers and the like.

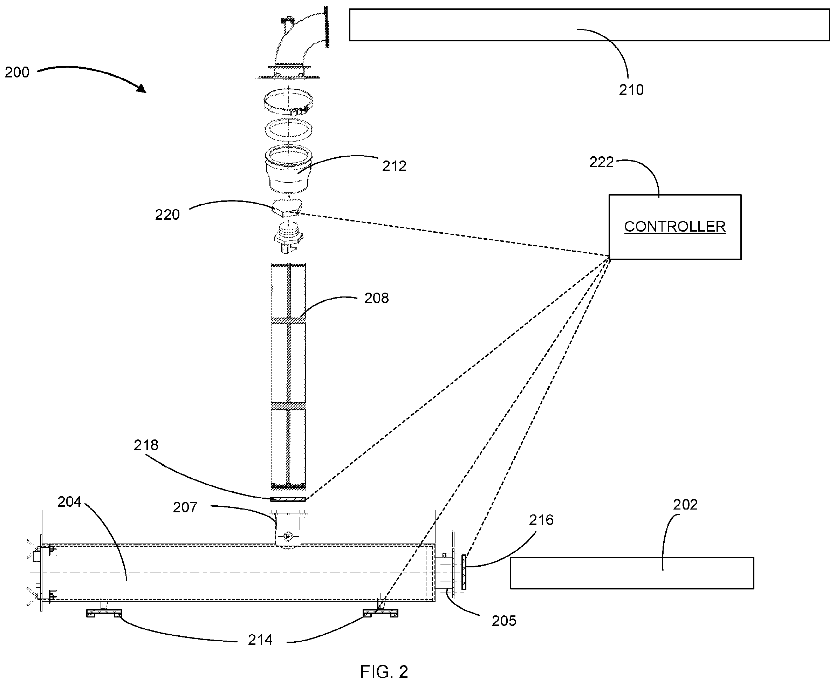

FIG. 2 shows an illustration of an exemplary irrigation system in accordance with a first preferred embodiment of the present invention. As shown, an exemplary system of the present invention may preferably function within an irrigation system 200 which includes a water supply 202 which preferably provides water under pressure into an in-line filter 204 or the like. As shown, the pressurized water is preferably directed through an inlet assembly 205 into the in-line filter 204. Within the in-line filter 204, the water is preferably screened to remove sand and debris before the water is directed out of an outlet 207 and up through a riser 208 to one or more span pipes 210 for dispersal to sprinklers and end guns as discussed above.

As further shown in FIG. 2, the system of the present invention may preferably include an inlet pressure sensor/transducer 216 and an outlet pressure sensor/transducer 218. These sensors 216, 218 preferably monitor the water pressure at the inlet and outlet respectively. According to a further preferred embodiment, the sensors 216, 218 preferably are equipped with and/or linked to one or more transmitter/reporting devices (e.g., LoRa, Bluetooth, NFC, Zigbee or the like) for reporting sensor readings to a central control device 222. The components/devices may also be directly wired to the control panel and/or to one or more other devices reporting or sensor devices.

Additionally, the in-line filter 204 is preferably equipped with one or more load cells 214 (i.e., weight sensors) which are capable of sensing the weight of the in-line filter 204. According to a preferred embodiment, the load cells of the present invention may preferably be incorporated into the feet of the in-line filter 204. Additionally, the load cells 214 are preferably linked to one or more wireless reporting devices for transmitting load cell 214 sensor readings to the central control device 222 as discussed further herein.

As further shown in FIG. 2, an exemplary system of the present invention may preferably further include one or more sediment traps 212 for removing sand and debris from water as it is directed through the irrigation system and downstream spans 210. According to a preferred embodiment, the attached sediment filters may preferably include load cells 220 for detecting the weight of the sediment filter as it retains increasing amounts of sediment. Further, the sediment load cells 214, 220 preferably may further include one or more reporting devices (e.g., wired transmitters or wireless transceivers) for transmitting load cell 214, 220 sensor readings to the central control device 222 as discussed further herein.

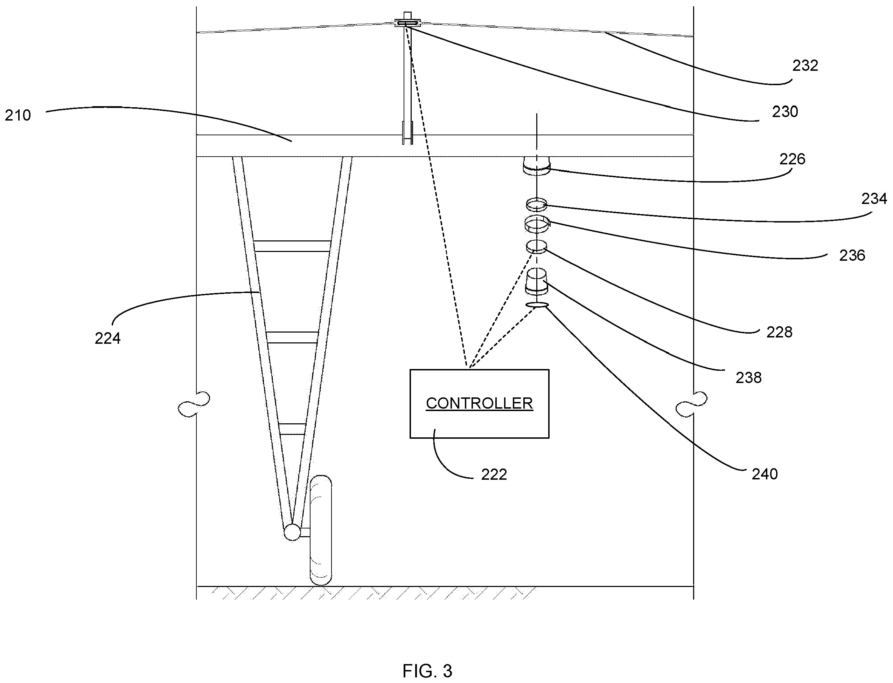

Referring now to FIG. 3, a further detailed view of the exemplary system is provided. As shown, the main irrigation span 210 may preferably include one or more supporting drive towers 224 and supporting cables 232. Additionally, the irrigation span 210 may include one or more additional downstream clean outs 226. According to a preferred embodiment, the clean outs 226 may work with a sediment trap 238, which may be secured with a ring lock connector 236 and a gasket 234 and/or the like. As further shown, a weighing device 228 (e.g., a load cell or the like) may be included to detect weight/sediment levels within the span 210 and the clean out 226. According to a preferred embodiment, the weighing device 228 may be incorporated along with a valve 240 which may be automatically opened by the controller 222 (or other device) to flush the trap 226 when a detected weight exceeds a predetermined level.

In addition, the span of the present invention may also include one or more tension sensors 230. According to a preferred embodiment, the tension sensor(s) 230 may preferably sense the amount of tension applied to one or more support cables 232 (e.g., back cables, overhang cables and the like) and report the tension level(s) to the controller 222 (or other processing device). In this way, the system of the present invention may receive and process data from one or more tension sensors 230, and may use the data to signal weight levels and to open selected valves in response to detected weights exceeding predetermined levels. Preferably, the selected predetermined weight levels may be adjusted and calibrated based on detected water pressures and other factors as discussed further herein.

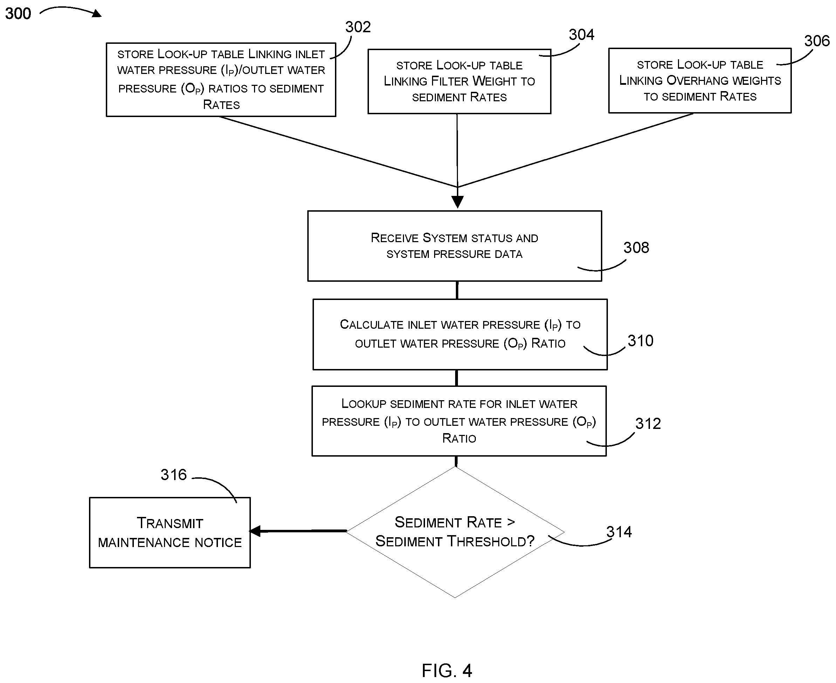

With reference now to FIGS. 4-6, exemplary steps of preferred methods of the present invention shall now be discussed. FIG. 4 is a flow chart illustrating a first set of method steps 300 in accordance with an exemplary embodiment of the present invention. At a first step 302, the system of the present invention preferably populates and stores a look-up table linking the various ranges of I_{P}:Oₚ ratios (i.e., inlet water pressures (I_{P}) to outlet water pressures (Oₚ) ratios) to determined, associated sediment rates for each range. For the purpose of the present invention, sediment rates are understood to mean the amount of sediment (e.g., sand or other debris) which is estimated to be trapped within a given filter such as the in-line filter 204. Similarly, at a next step 304, the system of the present invention may preferably populate and store a look-up table linking various ranges of in-line filter 204 weights to determined, associated sediment rates for each range. At a next step 306, the system may further populate and store a look-up table linking various ranges of overhang/sand trap weights to determined, associated sediment rates for each range. According to alternative preferred embodiments, the system of the present invention may store a single look-up table of data and/or may store two or more.

At a next step 308, the system may then receive system sensor data from one or more sensors within the irrigation system. According to the present invention, such sensor data may include data such as: inlet water pressure (I_{P}); outlet water pressure (Op); in-line filter weight; and overhang/sand trap weight sensor data.

At a next step 310, the system may calculate the I_{P}:Oₚ ratio(s) for detected pressures. At a next step 312, the system may compare the calculated I_{P:}Oₚ ratio to stored ranges of ratios to identify a pre-calculated, associated sediment rate for the calculated I_{P:} Oₚ ratio.

At a next step 314, the system may preferably further compare the determined sediment rate to a pre-set sediment threshold which indicates a cut-off level for required filter maintenance. Where the determined sediment rate exceeds the pre-set sediment threshold, the system at a next step 316 may transmit maintenance notices or provide a visual/audial notice of the maintenance notice. According to a further preferred embodiment, different pre-set sediment thresholds may be determined, stored and used depending on other detected factors such as: needed watering pressures, pump duty cycles, pump/motor temperatures, well water levels, filter types, and the like. Additionally, the sediment thresholds may be adjusted based on detected crop irrigation needs (e.g., growing status, health indicators, ground moisture, weather). Additionally, the sediment thresholds may be adjusted based on other factors such as: whether chemigation/fertigation is active; whether the minimum machine pressure for proper water application is available downstream of the filter; and the like. Preferably, the system of the present invention may work with the water supply system (i.e., pump) and end of machine or pivot pressures to: ensure the system is providing the minimum required pressure for proper water application; and to predict, based on the rate of change of the Ip/Op ratio and ratio of the pump supply pressure to maximum pump pressure, when flushing or filter maintenance would need to occur. Preferably, the system may include preset ratios and/or threshold levels for each of these data points to trigger specific alerts and warnings. Preferably, each of these ratios may further be adjusted based on specific tasks performed by the irrigation system (e.g., chemigation/fertigation, water, specific applicant mixes, and the like.).

According to preferred embodiments, in step 316 (and steps 322, 328 discussed below), the system of the present invention may perform a number of possible preprogrammed actions in response to a detected threshold condition. Accordingly, the system may trigger an alert (e.g., "filter flush required," and/or "machine flush required" (in the case of sediment overload in the overhang or at the end of the machine)) to be displayed on a control panel. Additionally, a notice may be sent via the remote monitoring and control system to the operator or grower. Still further, the system may stop the pump and/or irrigation machine and record or transmit an error code or the like. As another alternative, the system may also trigger an automatic flushing system to clear the filter and to allow the machine to restart. For example, an overhang flush valve may be opened to allow the debris or sand to be removed from the machine. Preferably, the flushing would only be permitted when irrigating, not when chemigation or fertigating. In addition, the machine would preferably temporarily stop while any flushing action was taking place to ensure no under-watering occurred.

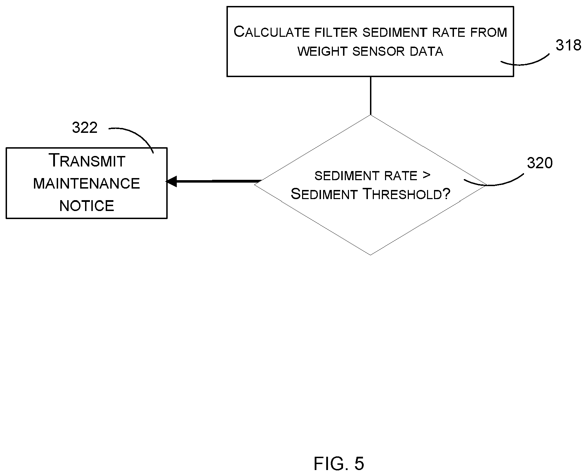

Referring now to FIG. 5, at a next step 318 the system of the present invention may compare the one or more detected in-line filter weights to stored ranges of weights in the look-up table to identify a pre-calculated, associated sediment rate for the in-line filter. At a next step 320, the system may preferably further compare the determined sediment rate to a pre-set sediment threshold which indicates a cut-off level for required filter maintenance. Where the determined sediment rate exceeds the pre-set sediment threshold, the system at a next step 322 may transmit maintenance notices or provide a visual/audial notice of the maintenance notice. According to a further preferred embodiment, different pre-set sediment thresholds may be determined, stored and used depending on other detected factors such as the needed watering pressures, pump duty cycles, pump/motor temperatures, well water levels, filter types, and the like. Additionally, the pre-calculated, associated sediment rates in the look-up table may preferably include different weight ranges for different states of the in-line filter. Accordingly, the in-line filter may have different associated weight adjustments based on whether the in-line filter is in active use, drained and/or under various different states of detected water pressures at the inlet or outlet.

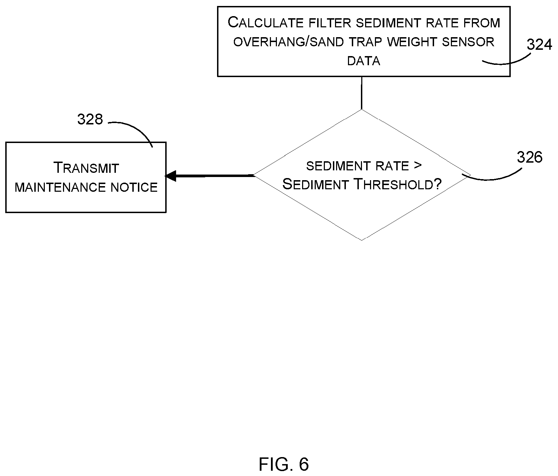

Referring now to FIG. 6, at a next step 324 the system of the present invention may compare one or more detected overhang/sand trap weights to stored ranges of weights in the look-up table to identify a pre-calculated, associated sediment rate for the in-line filter. At a next step 326, the system may preferably further compare the determined sediment rate to a pre-set sediment threshold which indicates a cut-off level for required filter maintenance. Where the determined sediment rate exceeds the pre-set sediment threshold, the system at a next step 328 may transmit maintenance notices or provide a visual/audial notice of the maintenance notice. According to a further preferred embodiment, different pre-set sediment thresholds may be determined, stored and used depending on other detected factors such as the needed watering pressures, pump duty cycles, pump/motor temperatures, well water levels, filter types, and the like. Additionally, the pre-calculated, associated sediment rates in the look-up table may preferably include different weight ranges for different states of the in-line filter. Accordingly, the in-line filter may have different associated weight adjustments based on the whether the in-line filter is in active use, drained and/or under various different states of detected water pressures at the inlet or outlet.

According to alternative embodiments, the system of the present invention may further include the step of comparing the calculated sediment rates from one or more of steps 312, 318 and 324 to provide a further degree of confidence in the calculated sediment rates of a given filter system. Accordingly, exemplary embodiments of the present invention may further average two or more of the calculated sediment rates together before analyzing the sediment rates against stored sediment threshold values for any given filter.

While the above descriptions regarding the present invention contain much specificity, these should not be construed as limitations on the scope, but rather as examples. Many other variations are possible. For example, the processing elements of the present invention by the present invention may operate on a number of different frequencies, voltages, amps and BUS configurations. Further, the communications provided with the present invention may be designed to be duplex or simplex in nature. Further, the systems of the present invention may be used with any arrangement of drive towers including both linear and center pivot systems. Further, as needs require, the processes for transmitting data to and from the present invention may be designed to be push or pull in nature. Still, further, each feature of the present invention may be made to be remotely activated and accessed from distant monitoring stations. Accordingly, data may preferably be uploaded to and downloaded from the present invention as needed.

## Claims

1. A flow monitoring system (100, 200) for use within a field irrigation system, wherein the field irrigation system includes at least a first water supply line (202) supplying water under pressure through a riser (208) to a lateral span (210) for dispersal through a plurality of sprinklers; wherein the lateral span is supported by one or more drive towers (224) and supporting cables (232); the flow monitoring system comprising:
an in-line filter (204), wherein the in-line filter is connected between the water supply line and the riser; wherein the in-line filter comprises an inlet assembly (205);
wherein the in-line filter comprises one or more internal filters for screening inlet water for sediment; wherein the in-line filter further comprises an outlet assembly (207) for directing water from the in-line filter to the riser;
wherein the inlet assembly comprises an inlet pressure sensor (216) and an inlet transmitter device; wherein the outlet assembly comprises an outlet pressure sensor (218) and an outlet transmitter device;
a central control device (222);
wherein the inlet transmitter device is configured to transmit an inlet pressure reading to the central control device; wherein the outlet transmitter device is configured to transmit an outlet pressure reading to the central control device; and
one or more in-line filter load cells (214);
wherein at least one in-line filter load cell comprises a sensor for actively sensing the weight of the in-line filter;
wherein at least one in-line filter load cell is linked to one or more in-line wireless reporting devices; wherein at least one in-line wireless reporting device is configured to transmit load cell sensor readings to the central control device.

2. The system of claim 1, wherein the system comprises a first riser sediment trap (212).

3. The system of claim 2, wherein the first riser sediment trap is installed between the in-line filter and the lateral span.

4. The system of claim 3, wherein the first riser sediment trap comprises a first sediment filter and a first trap load cell.

5. The system of claim 4, wherein the first trap load cell comprises a first trap sensor for detecting the weight of the sediment retained within the first riser sediment trap.

6. The system of claim 5, wherein the first riser sediment trap comprises first trap reporting device for transmitting first trap load cell data to the central control device.

7. The system of claim 6, wherein the system further comprises a lateral span clean out (226); wherein the system further comprises a second sediment filter assembly;

8. The system of claim 7, wherein the system further comprises a second sediment filter assembly; wherein the second sediment filter assembly comprises a second load cell for detecting sediment levels within the lateral span clean out.

9. The system of claim 8, wherein the system further comprises a first span tension sensor (230)

10. The system of claim 9, wherein the first span tension sensor is configured to sense the amount of tension applied to one or more support cables attached to the lateral span.

11. The system of claim 10, wherein the first span tension sensor comprises a first tension sensor transmitter; wherein the first tension sensor transmitter comprises a transmitter configured to report tension sensor data to the central control device.

12. The system of claim 11, wherein the central control device is configured to open selected valves in response to detected weights exceeding predetermined levels.

13. The system of claim 12, wherein the central control device is configured to adjust one or more predetermined weight levels based on detected water pressure levels.

14. The system of claim 13, wherein the central control device is configured to adjust one or more predetermined weight levels based on a system parameter selected from the group of system parameters comprising: pump duty cycle, pump/motor temperatures, well water levels and filter type.

15. The system of claim 14, wherein the central control device is configured to adjust one or more predetermined weight levels based on one or more crop irrigation parameters.

16. The system of claim 15, wherein the crop irrigation parameters comprise a parameter selected from the group of parameters comprising: growth status, health indicators, ground moisture, and weather.

17. The system of claim 16, wherein the central control device is configured to adjust predetermined weight levels based on whether chemigation/fertigation is active.

18. The system of claim 17, wherein the in-line filter is supported by one or more attached feet.

19. The system of claim 18, wherein at least one in-line filter load cell is incorporated into the one or more attached feet of the in-line filter.

20. The system of claim 19, wherein the second sediment filter assembly comprises a ring lock connector (236) and a sealing gasket (234).

21. The system of claim 20, wherein the second sediment filter assembly comprises a release valve; wherein the release valve (240) is controllable by the controller to flush the lateral span clean out when a detected weight exceeds a predetermined level.

22. A method for monitoring the filter status within the irrigation system claimed in claim 1, wherein the method comprises:
populating and storing a first look-up table linking a first set of ranges of inlet water pressures to outlet water pressure ratios to a first set of determined, associated sediment rates for each of the first set of ranges;
populating and storing a second look-up table linking a second set of ranges of in-line filter weights to a second set of determined, associated sediment rates for each of the second set of ranges;
populating and storing a third look-up table linking a third set of ranges of overhang/sand trap weights to a third set of determined, associated sediment rates for each of the third set of ranges;
receiving system sensor data from one or more sensors within the irrigation system, wherein the one or more sensors are selected from the group of sensors comprising: inlet water pressure sensor; outlet water pressure sensor; in-line filter weight sensor; and overhang/sand trap weight sensor;
calculating a first ratio, wherein the first ratio comprises a ratio of the inlet water pressure to the outlet water pressure;
comparing the first ratio to the first set of ranges stored in the first look-up table to identify a first associated sediment rate for the calculated first ratio;
comparing the first associated sediment rate to a first sediment threshold;
transmitting a first maintenance notice if the first associated sediment rate exceeds the first pre-set sediment threshold,
calculating a second weight of the in-line filter;
comparing the second weight to the second set of ranges stored in the second look-up table to identify a second associated sediment rate for the calculated second weight;
comparing the second associated sediment rate to a second sediment threshold;
transmitting a second maintenance notice if the second associated sediment rate exceeds the second pre-set sediment threshold,
calculating a third weight of the overhang/sand trap weights;
comparing the third weight to the third set of ranges stored in the third look-up table to identify a third associated sediment rate for the calculated third weight;
comparing the third associated sediment rate to a third sediment threshold; and
transmitting a third maintenance notice if the third associated sediment rate exceeds the third pre-set sediment threshold.

## Patentansprüche

1. Durchflussüberwachungssystem (100, 200) zur Verwendung in einem Feldbewässerungssystem, wobei das Feldbewässerungssystem mindestens eine erste Wasserversorgungsleitung (202) umfasst, die Wasser unter Druck durch ein Steigrohr (208) zu einem Seitenstrang (210) zur Verteilung durch eine Mehrzahl von Sprinklern leitet; wobei der Seitenstrang durch einen oder mehrere Antriebstürme (224) und Tragseile (232) gestützt wird;
wobei das Durchflussüberwachungssystem umfasst:
einen Inline-Filter (204),
wobei der Inline-Filter zwischen der Wasserversorgungsleitung und dem Steigrohr verbunden ist; wobei der Inline-Filter eine Einlassbaugruppe (205) umfasst;
wobei der Inline-Filter einen oder mehrere interne Filter zur Siebung des Einlasswassers auf Sediment umfasst;
wobei der Inline-Filter ferner eine Auslassbaugruppe (207) umfasst, um Wasser vom Inline-Filter zum Steigrohr zu leiten;
wobei die Einlassbaugruppe einen Einlassdrucksensor (216) und eine Einlasssendevorrichtung
umfasst; wobei die Auslassbaugruppe einen Auslassdrucksensor (218) und eine Auslasssendevorrichtung umfasst;
eine zentrale Steuervorrichtung (222);
wobei die Einlasssendevorrichtung dazu ausgelegt ist, einen Einlassdruckmesswert an die zentrale Steuervorrichtung zu übertragen; wobei die Auslasssendevorrichtung dazu ausgelegt ist, einen Auslassdruckmesswert an die zentrale Steuervorrichtung zu übertragen; und
eine oder mehrere Inline-Filter-Wägezellen (214); wobei mindestens eine Inline-Filter-Wägezelle einen Sensor zur aktiven Messung des Gewichts des Inline-Filters umfasst;
wobei mindestens eine Inline-Filter-Wägezelle mit einer oder mehreren drahtlosen Inline-Meldevorrichtungen verbunden ist; wobei mindestens eine drahtlose Inline-Meldevorrichtung dazu ausgelegt ist, Wägezellensensormesswerte an die zentrale Steuervorrichtung zu übertragen.

2. System nach Anspruch 1, wobei das System eine erste Steigrohr-Sedimentfalle (212) umfasst.

3. System nach Anspruch 2, wobei die erste Steigrohr-Sedimentfalle zwischen dem Inline-Filter und dem Seitenstrang installiert ist.

4. System nach Anspruch 3, wobei die erste Steigrohr-Sedimentfalle einen ersten Sedimentfilter und eine erste Fallenwägezelle umfasst.

5. System nach Anspruch 4, wobei die erste Fallenwägezelle einen ersten Fallensensor zum Erkennen des Gewichts des in der ersten Steigrohr-Sedimentfalle zurückgehaltenen Sediments umfasst.

6. System nach Anspruch 5, wobei die erste Steigrohr-Sedimentfalle eine erste Fallenmeldevorrichtung zum Senden der ersten Fallenwägezelldaten an die zentrale Steuervorrichtung umfasst.

7. System nach Anspruch 6, wobei das System ferner einen Seitenstrang-Reinigungsauslass (226) umfasst; wobei das System ferner eine zweite Sedimentfilterbaugruppe umfasst.

8. System nach Anspruch 7, wobei das System ferner eine zweite Sedimentfilterbaugruppe umfasst; wobei die zweite Sedimentfilterbaugruppe eine zweite Wägezelle zum Erkennen des Sedimentniveaus im Seitenstrang-Reinigungsauslass umfasst.

9. System nach Anspruch 8, wobei das System ferner einen ersten Strangspannungssensor (230) umfasst

10. System nach Anspruch 9, wobei der erste Strangspannungssensor dazu ausgelegt ist, die auf ein oder mehrere am Seitenstrang befestigte Tragseile aufgebrachte Spannung zu messen.

11. System nach Anspruch 10, wobei der erste Strangspannungssensor einen ersten Spannungssensorsender umfasst; wobei der erste Spannungssensorsender einen Sender umfasst, der dazu ausgelegt ist, Spannungssensordaten an die zentrale Steuervorrichtung zu melden.

12. System nach Anspruch 11, wobei die zentrale Steuervorrichtung dazu ausgelegt ist, ausgewählte Ventile zu öffnen, wenn erkannte Gewichte vorbestimmte Niveaus überschreiten.

13. System nach Anspruch 12, wobei die zentrale Steuervorrichtung dazu ausgelegt ist, ein oder mehrere vorbestimmte Gewichtsniveaus basierend auf erkannten Wasserdruckniveaus anzupassen.

14. System nach Anspruch 13, wobei die zentrale Steuervorrichtung dazu ausgelegt ist, ein oder mehrere vorbestimmte Gewichtsniveaus basierend auf einem Systemparameter anzupassen, der aus der Gruppe von Systemparametern ausgewählt wird, die umfasst: Pumpentastverhältnis, Pumpen-/Motortemperaturen, Brunnenwasserstände und Filtertyp.

15. System nach Anspruch 14, wobei die zentrale Steuervorrichtung dazu ausgelegt ist, ein oder mehrere vorbestimmte Gewichtsniveaus basierend auf einem oder mehreren Nutzpflanzenbewässerungsparametern anzupassen.

16. System nach Anspruch 15, wobei die Nutzpflanzenbewässerungsparameter einen Parameter umfassen, der aus der Gruppe von Parametern ausgewählt wird, die umfasst: Wachstumsstatus, Gesundheitsindikatoren, Bodenfeuchtigkeit und Wetter.

17. System nach Anspruch 16, wobei die zentrale Steuervorrichtung dazu ausgelegt ist, vorbestimmte Gewichtsniveaus basierend darauf anzupassen, ob Chemigation/Fertigation aktiv ist.

18. System nach Anspruch 17, wobei der Inline-Filter durch einen oder mehrere befestigte Standfüße gestützt wird.

19. System nach Anspruch 18, wobei mindestens eine Inline-Filter-Wägezelle in den einen oder die mehreren befestigten Standfüße des Inline-Filters integriert ist.

20. System nach Anspruch 19, wobei die zweite Sedimentfilterbaugruppe einen Ringverriegelungsanschluss (236) und eine Dichtungsmanschette (234) umfasst.

21. System nach Anspruch 20, wobei die zweite Sedimentfilterbaugruppe ein Ablassventil umfasst; wobei das Ablassventil (240)
durch die Steuerung steuerbar ist, um den Seitenstrang-Reinigungsauslass zu spülen, wenn ein erkanntes Gewicht ein vorbestimmtes Niveau überschreitet.

22. Verfahren zum Überwachen des Filterstatus innerhalb des Bewässerungssystems nach Anspruch 1, wobei das Verfahren umfasst:
Befüllen und Speichern einer ersten Nachschlagetabelle, die einen ersten Satz von Bereichen von Verhältnissen von Einlasswasserdrücken zu Auslasswasserdruck mit einem ersten Satz von bestimmten, zugehörigen Sedimentraten für jeden des ersten Satzes von Bereichen verknüpft;
Befüllen und Speichern einer zweiten Nachschlagetabelle, die einen zweiten Satz von Bereichen von Inline-Filtergewichten mit einem zweiten Satz von bestimmten, zugehörigen Sedimentraten für jeden des zweiten Satzes von Bereichen verknüpft;
Befüllen und Speichern einer dritten Nachschlagetabelle, die einen dritten Satz von Bereichen von Überhang- /Sandfallengewichten mit einem dritten Satz von bestimmten, zugehörigen Sedimentraten für jeden des dritten Satzes von Bereichen verknüpft;
Empfangen von Systemsensordaten von einem oder mehreren Sensoren im Bewässerungssystem, wobei der eine oder die mehreren Sensoren aus der Gruppe von Sensoren ausgewählt werden, die umfasst: Einlasswasserdrucksensor; Auslasswasserdrucksensor; Inline-Filtergewichtssensor; und Überhang-/Sandfallengewichtssensor;
Berechnen eines ersten Verhältnisses, wobei das erste Verhältnis ein Verhältnis des Einlasswasserdrucks zum Auslasswasserdruck umfasst;
Vergleichen des ersten Verhältnisses mit dem ersten Satz von Bereichen, der in der ersten Nachschlagetabelle gespeichert ist, um eine erste zugehörige Sedimentrate für das berechnete erste Verhältnis zu identifizieren;
Vergleichen der ersten zugehörigen Sedimentrate mit einem ersten Sedimentgrenzwert;
Übertragen einer ersten Wartungsmitteilung, wenn die erste zugehörige Sedimentrate den ersten voreingestellten Sedimentgrenzwert überschreitet,
Berechnen eines zweiten Gewichts des Inline-Filters;
Vergleichen des zweiten Gewichts mit dem zweiten Satz von Bereichen, der in der zweiten Nachschlagetabelle gespeichert ist, um eine zweite zugehörige Sedimentrate für das berechnete zweite Gewicht zu identifizieren;
Vergleichen der zweiten zugehörigen Sedimentrate mit einem zweiten Sedimentgrenzwert;
Senden einer zweiten Wartungsmitteilung, wenn die zweite zugehörige Sedimentrate den zweiten voreingestellten Sedimentgrenzwert überschreitet;
Berechnen eines dritten Gewichts des Überhangs/der Sandfalle;
Vergleichen des dritten Gewichts mit dem dritten Satz von Bereichen, der in der dritten Nachschlagetabelle gespeichert ist, um eine dritte zugehörige Sedimentrate für das berechnete dritte Gewicht zu identifizieren;
Vergleichen der dritten zugehörigen Sedimentrate mit einem dritten Sedimentgrenzwert; und
Senden einer dritten Wartungsmitteilung, wenn die dritte zugehörige Sedimentrate den dritten voreingestellten Sedimentgrenzwert überschreitet.

## Revendications

1. Système de surveillance d'écoulement (100, 200) pour utilisation à l'intérieur d'un système d'irrigation de champ, dans lequel le système d'irrigation de champ inclut au moins une première ligne d'alimentation en eau (202) fournissant de l'eau sous pression à travers une colonne montante (208) vers une travée latérale (210) pour dispersion à travers une pluralité d'arroseurs ; dans lequel la travée latérale est supportée par une ou plusieurs tours d'entraînement (224) et câbles de support (232) ;
le système de surveillance d'écoulement comprenant :
un filtre en ligne (204), dans lequel le filtre en ligne est raccordé entre la ligne d'alimentation en eau et la colonne montante ; dans lequel le filtre en ligne comprend un ensemble d'entrée (205) ;
dans lequel le filtre en ligne comprend un ou plusieurs filtres internes pour tamiser l'eau d'entrée pour les sédiments ;
dans lequel le filtre en ligne comprend en outre un ensemble de sortie (207) pour diriger l'eau à partir du filtre en ligne vers la colonne montante ;
dans lequel l'ensemble d'entrée comprend un capteur de pression d'entrée (216) et un dispositif émetteur d'entrée ;
l'ensemble de sortie comprend un capteur de pression de sortie (218) et
un dispositif émetteur de sortie ;
un dispositif de commande central (222) ;
dans lequel le dispositif émetteur d'entrée est configuré pour transmettre une lecture de pression d'entrée au dispositif de commande central ; dans lequel le dispositif émetteur de sortie est configuré pour transmettre une lecture de pression de sortie au dispositif de commande central ; et
une ou plusieurs cellules de charge de filtre en ligne (214) ;
dans lequel au moins une cellule de charge de filtre en ligne comprend un capteur pour détecter activement le poids du filtre en ligne ;
dans lequel au moins une cellule de charge de filtre en ligne est liée à un ou plusieurs dispositifs de rapport sans fil en ligne ; dans lequel au moins un dispositif de rapport sans fil en ligne est configuré pour transmettre des lectures de capteur de cellule de charge au dispositif de commande central.

2. Système selon la revendication 1, dans lequel le système comprend un premier piège à sédiments de colonne montante (212).

3. Système selon la revendication 2, dans lequel le premier piège à sédiments de colonne montante est installé entre le filtre en ligne et la travée latérale.

4. Système selon la revendication 3, dans lequel le premier piège à sédiments de colonne montante comprend un premier filtre à sédiments et une première cellule de charge de piège.

5. Système selon la revendication 4, dans lequel la première cellule de charge de piège comprend un premier capteur de piège pour détecter le poids des sédiments retenus à l'intérieur du premier piège à sédiments de colonne montante.

6. Système selon la revendication 5, dans lequel le premier piège à sédiments de colonne montante comprend un premier dispositif de rapport de piège pour transmettre des données de première cellule de charge de piège au dispositif de commande central.

7. Système selon la revendication 6, dans lequel le système comprend en outre un orifice de nettoyage de travée latérale (226) ; dans lequel le système comprend en outre un second ensemble de filtre à sédiments.

8. Système selon la revendication 7, dans lequel le système comprend en outre un second ensemble de filtre à sédiments ; dans lequel le second ensemble de filtre à sédiments comprend une seconde cellule de charge pour détecter des niveaux de sédiments à l'intérieur de l'orifice de nettoyage de travée latérale.

9. Système selon la revendication 8, dans lequel le système comprend en outre un premier capteur de tension de travée (230)

10. Système selon la revendication 9, dans lequel le premier capteur de tension de travée est configuré pour détecter la quantité de tension appliquée à un ou plusieurs câbles de support attachés à la travée latérale.

11. Système selon la revendication 10, dans lequel le premier capteur de tension de travée comprend un premier émetteur de capteur de tension ; dans lequel le premier émetteur de capteur de tension comprend un émetteur configuré pour rapporter des données de capteur de tension au dispositif de commande central.

12. Système selon la revendication 11, dans lequel le dispositif de commande central est configuré pour ouvrir des vannes sélectionnées en réponse à des poids détectés dépassant des niveaux prédéterminés.

13. Système selon la revendication 12, dans lequel le dispositif de commande central est configuré pour ajuster un ou plusieurs niveaux de poids prédéterminés sur la base de niveaux de pression d'eau détectés.

14. Système selon la revendication 13, dans lequel le dispositif de commande central est configuré pour ajuster un ou plusieurs niveaux de poids prédéterminés sur la base d'un paramètre de système sélectionné dans le groupe de paramètres de système comprenant : cycle de service de pompe, températures de pompe/moteur, niveaux d'eau de puits et type de filtre.

15. Système selon la revendication 14, dans lequel le dispositif de commande central est configuré pour ajuster un ou plusieurs niveaux de poids prédéterminés sur la base d'un ou plusieurs paramètres d'irrigation de culture.

16. Système selon la revendication 15, dans lequel les paramètres d'irrigation de culture comprennent un paramètre sélectionné dans le groupe de paramètres comprenant : état de croissance, indicateurs de santé, humidité du sol, et météo.

17. Système selon la revendication 16, dans lequel le dispositif de commande central est configuré pour ajuster des niveaux de poids prédéterminés sur la base du fait qu'une chimigation/fertirrigation est active.

18. Système selon la revendication 17, dans lequel le filtre en ligne est supporté par un ou plusieurs pieds attachés.

19. Système selon la revendication 18, dans lequel au moins une cellule de charge de filtre en ligne est incorporée dans l'un ou plusieurs des pieds attachés du filtre en ligne.

20. Système selon la revendication 19, dans lequel le second ensemble de filtre à sédiments comprend un raccord à bague de verrouillage (236) et un joint d'étanchéité (234).

21. Système selon la revendication 20, dans lequel le second ensemble de filtre à sédiments comprend une vanne de libération ; dans lequel la vanne de libération (240) est commandable par le dispositif de commande pour rincer l'orifice de nettoyage de travée latérale lorsqu'un poids détecté dépasse un niveau prédéterminé.

22. Procédé pour surveiller l'état de filtre à l'intérieur du système d'irrigation revendiqué dans la revendication 1, dans lequel le procédé comprend :
la constitution et le stockage d'une première table de recherche liant un premier ensemble de plages de rapports de pressions d'eau d'entrée sur des pressions d'eau de sortie à un premier ensemble de taux de sédiments associés déterminés pour chacune du premier ensemble de plages ;
la constitution et le stockage d'une deuxième table de recherche liant un deuxième ensemble de plages de poids de filtre en ligne à un deuxième ensemble de taux de sédiments associés déterminés pour chacune du deuxième ensemble de plages ;
la constitution et le stockage d'une troisième table de recherche liant un troisième ensemble de plages de poids de porte-à-faux/piège à sable à un troisième ensemble de taux de sédiments associés déterminés pour chacune du troisième ensemble de plages ;
la réception de données de capteur de système à partir d'un ou plusieurs capteurs à l'intérieur du système d'irrigation, dans lequel l'un ou plusieurs capteurs sont sélectionnés dans le groupe de capteurs comprenant : capteur de pression d'eau d'entrée ; capteur de pression d'eau de sortie ; capteur de poids de filtre en ligne ; et capteur de poids de porte-à-faux/piège à sable ;
le calcul d'un premier rapport, dans lequel le premier rapport comprend un rapport de la pression d'eau d'entrée sur la pression d'eau de sortie ;
la comparaison du premier rapport au premier ensemble de plages stocké dans la première table de recherche pour identifier un premier taux de sédiments associé pour le premier rapport calculé ;
la comparaison du premier taux de sédiments associé à un premier seuil de sédiments ;
la transmission d'un premier avis de maintenance si le premier taux de sédiments associé dépasse le premier seuil de sédiments prédéfini ;
le calcul d'un deuxième poids du filtre en ligne ;
la comparaison du deuxième poids au deuxième ensemble de plages stocké dans la deuxième table de recherche pour identifier un deuxième taux de sédiments associé pour le deuxième poids calculé ;
la comparaison du deuxième taux de sédiments associé à un deuxième seuil de sédiments ;
la transmission d'un deuxième avis de maintenance si le deuxième taux de sédiments associé dépasse le deuxième seuil de sédiments prédéfini ;
le calcul d'un troisième poids du porte-à-faux/piège à sable ;
la comparaison du troisième poids au troisième ensemble de plages stocké dans la troisième table de recherche pour identifier un troisième taux de sédiments associé pour le troisième poids calculé ;
la comparaison du troisième taux de sédiments associé à un troisième seuil de sédiments ; et
la transmission d'un troisième avis de maintenance si le troisième taux de sédiments associé dépasse le troisième seuil de sédiments prédéfini.
